# EUROPÄISCHE PATENTSCHRIFT

(11) **EP 0 503 157 B1**
(45) Veröffentlichungstag und Bekanntmachung des Hinweises auf die Patenterteilung: **13.07.1994**
(21) Anmeldenummer: 91122098.6
(22) Anmeldetag: 23.12.1991
(51) Int. Cl.: B60P 1/44

(54) **Vorrichtung zum Steuern von Hubvorrichtungen**
Device for controlling the raising of loading platforms
Dispositif pour commander l'élévation de plate-formes de chargement

(30) Priorität: 15.03.1991 DE 4108551
(43) Veröffentlichungstag der Anmeldung: 16.09.1992
(73) Patentinhaber: MBB Förder- und Hebesysteme GmbH, 27738 Delmenhorst (DE)
(72) Erfinder: Knobling, Manfred, W-2872 Hude (DE)
(74) Vertreter: MEISSNER, BOLTE & PARTNER Patentanwälte

(56) Entgegenhaltungen:
- EP-A- 0 031 000
- DE-C- 2 352 991
- DE-U- 7 817 063

## Beschreibung

Die Erfindung bezieht sich auf eine Vorrichtung zum Steuern von Hubvorrichtungen wie Ladebordwände für Lastkraftwagen, Hubladebühnen usw. mit einer automatischen Steuerschaltung, in der eine neigungs- und/oder positionsabhängige Schaltvorrichtung die Steuerschaltung beeinflußt.

Bei Hubvorrichtungen, wie Ladebordwänden von Lastkraftwagen oder Hebetischen ist es üblich die Plattform beim Erreichen des Bodens bzw. des unteren Niveaus durch Neigen dem Boden anzugleichen. Eine solche Maßnahme ermöglicht ein leichteres Be- und Entladen der Plattform z.B. durch Aufrollen und daher ist es üblich diesen Angleichvorgang automatisch durchzuführen. Ein automatischer Angleichvorgang hat den Vorteil das Aufrichten und den Übergang zum Hub kontinierlich vorzunehmen.

Wie aus der DE-C 23 52 991 bekannt, kann ein Angleichvorgang mit mechanischen Mitteln, wie längenveränderbaren Parallelführungselementen, vorgenommen werden, aber solche mechanischen Vorrichtungen versagen bei sehr steil nach oben und unten bestehenden Anbauten, z.B. bei Lastkraftwagen mit geringem Überhang. Weiterhin ist es bekannt, automatische Steuerschaltungen zum Bodenangleichen von Hubladevorrichtungen zu benutzen, in welchem für die neigungs- und/oder positionsabhängige Steuerung Quecksilberschalter eingesetzt sind. Solche Steuerschaltungen haben sich im Einsatz grundsätzlich bewährt, aber die Quecksilberschalter unterliegen einem Alterungsprozeß mit beachtlichen Änderungen des Schaltpunktes. Aufgrund praktischer Erfahrungen muß mit einer Verschiebung des Schaltpunktes von mehreren Graden gerechnet werden, so daß ein häufiges Nachstellen erforderlich wird. Außerdem werden solche Schalter wegen des giftigen Quecksilbers und dem sich verstärkenden Umweltbewußtsein nicht mehr bevorzugt. Eine derartige Vorrichtung ist z.B. aus EP-A-0 031 000 bekannt.

Der Erfindung liegt daher die Aufgabe zugrunde eine Schaltvorrichtung für eine automatische Steuerschaltung von Hubvorrichtungen zu schaffen, bei der für das neigungs- und/oder positionsabhängige Beeinflussen übliche Schalter einsetzbar sind. Diese Aufgabe ist gemäß der Erfindung dadurch gelöst, daß die Schaltvorrichtung aus einem an der Anlenkung der Hubvorrichtung und deren Gestänge drehfest angekoppelten Gehäuse mit einem daran angebrachten Schalter besteht, der über einen mit der Anlenkung der Hubvorrichtung gekoppelten Schaltnocken verstellbar ist.

Die erfindungsgemäße Schaltvorrichtung benutzt die Relativverstellung zwischen der Hubvorrichtung und deren Gestänge zum Verstellen eines oder mehrerer Schalter und damit zum Beeinflussen der Steuerschaltung. Dabei ist es vorteilhaft das Gehäuse mit einer Bohrung an einem in der Anlenkachse der Hubvorrichtung fest angebrachten Hohlbolzen und mit einer Lasche an einem Stift eines die Hubvorrichtung tragenden Parallelgestänges drehfest anzulenken, und den Schaltnocken in der Bohrung des Hohlbolzens mit einem überdrückbaren Kopplungselement einzusetzen. Für das überdrückbare Kopplungselement können reibschlüssige Verbindungen oder Federabstützungen verwendet werden.

Weiterhin ist es zweckmäßig am Schaltnocken eine Fahne zum Verstellen des oder weiterer im Gehäuse angeordneten Schalter vorzusehen. Es ist aber auch möglich an dem Hohlbolzen Kurvenbahnen mit Anschlägen zum positionsabhängigen Verstellen weiterer im Gehäuse angeordneten Schalter vorzusehen. Ausserdem kann zum Einstellen der auslösbaren Schaltfunktionen die Größe und/oder Form des Gehäuses verändert werden.

Die Erfindung wird anhand der beiliegenden Zeichnung erläutert. Es zeigen:
- Fig. 1: einen Ausschnitt einer Hubladebühne mit einer Schaltvorrichtung in Explosionsdarstellung,
- Fig. 2: eine Hubladebühne in Schließstellung,
- Fig. 3: eine Hubladebühne in angehobener und abgesenkter Stellung,
- Fig. 4: einen Ausschnitt einer Hubladebühne in Bodenneigungsstellung und
- Fig. 5: ein Gehäuse einer Schaltvorrichtung.

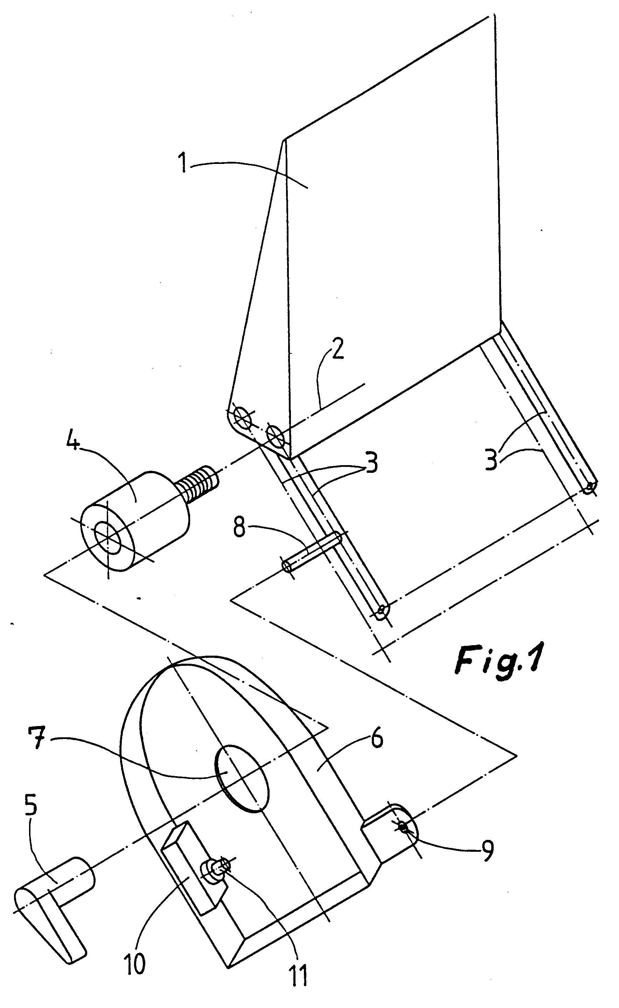

Wie in der Darstellung nach Fig. 1 zu erkennen, besteht eine Hubladebühne aus einer Plattform 1 die schwenkbar in einer Achse 2 an Parallelführungselementen 3 eines nicht näher dargestellten Lastkraftwagens angebracht ist. An einer Seite ist in der Achse 2 der Plattform 1 ein Hohlbolzen 4 fest angebracht, auf den ein Gehäuse 6 mit einer Bohrung 7 aufgesteckt ist. Das Gehäuse 6 besitzt weiterhin eine Lasche 9, in dessen Bohrung ein Stift 8 eingreift. Der Stift 8 ist an einem der Parallelführungselemente 3 angebracht, und zwar an dem mit der Achse 2 gekoppelten Führungselement. Im Gehäuse 6 ist ein Schalter 10 angebracht, der von einem im Hohlbolzen 4 eingesetzten Schaltnocken 5 verstellbar ist. Der Schaltnocken 5 ist im Hohlbolzen 4 überdrückbar eingesetzt, wofür Reibelemente oder eine Federabstützung benutzt werden können.

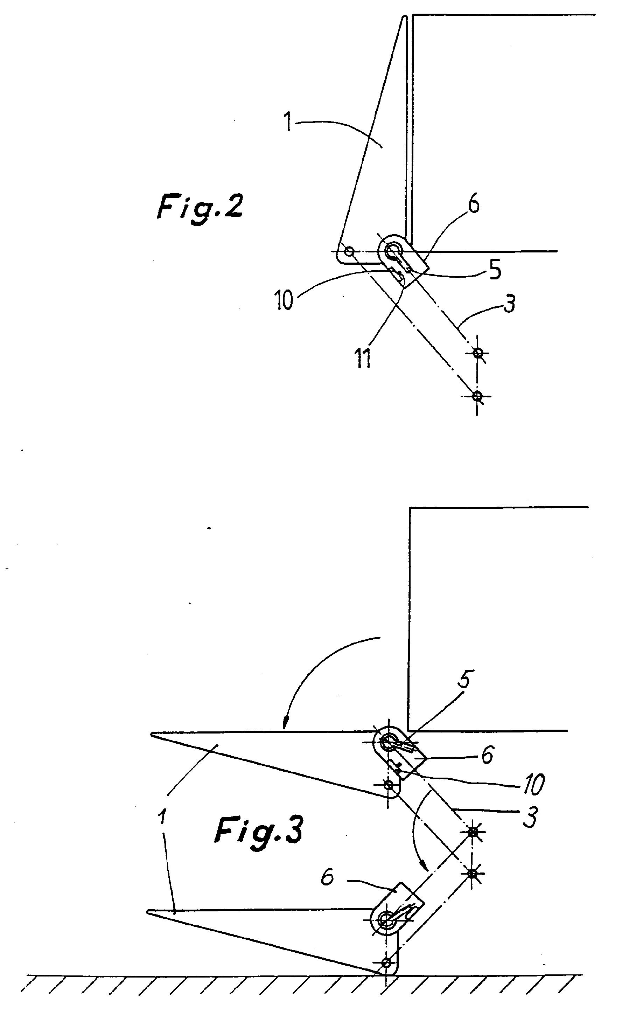

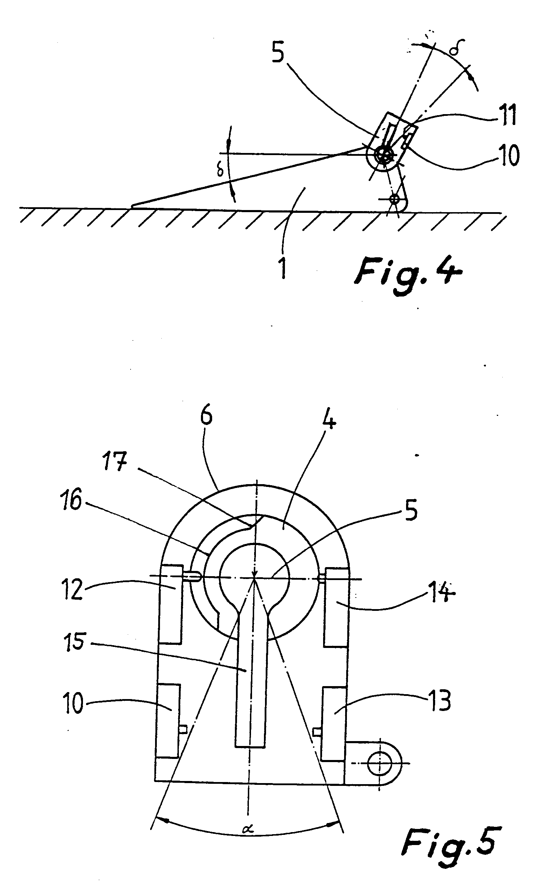

Wie aus den Darstellungen nach Fig. 2 bis Fig. 4 zu erkennen, wird beim Öffnen einer geschlossenen Ladebordwand (Fig. 2) diese gemäß Fig. 3 zunächst in die waagerechte Position geschwenkt, so daß der Schaltnocken 5 im Hohlbolzen 4 bis zum Anschlag am Gehäuse 6 mitschwenkt. Beim Absenken der Ladebordwand 1 von der angehobenen Stellung wird das Gehäuse 6 aufgrund der Ankopplung der Lasche 9 am Stift 8 der Parallelführungselemente 3 verschwenkt, so daß der Schaltnocken 5 im Gehäuse 6 zum Schalter 10 schwenkt und dessen Stößel 11 verstellt. Der Reibschluß zwischen Hohlbolzen 4 und Schaltnocken 5 sichert dabei die gewünschte Schalterverstellung und das notwendige überdrücken.

Beim Erreichen des Bodens (untere Stellung in Fig. 3) meldet ein bekannter Grenztaster (nicht dargestellt) diese Position so daß eine automatische Bodenangleichung einzusetzen beginnt. Der Schaltnocken 5 im Hohlbolzen 4 macht dann die erforderliche Schwenkbewegung aufgrund des vorgesehenen Reibschlusses im gleichen Maße wie die Plattform 1 mit, wodurch der Stößel 11 des Schalters 10 wieder freigegeben wird. Diese Tatsache ist durch den Winkel in Fig. 4 dargestellt.

Wenn die Plattform 1 aus der zum Boden geneigten Stellung gemäß Fig. 4 angehoben werden soll, dann muß die Plattform 1 zunächst in die waagerechte Position hochschwenken. Die Steuerschaltung ist dabei so ausgelegt, daß dieser Schwenkvorgang mit dem Verstellen des Schalters 10 beendet und das Anheben befohlen wird.

Die erfindungsgemäße Schaltvorrichtung kann, wie Fig. 5 zeigt, mit weiteren Schaltern 12, 13, 14 im Gehäuse 6 versehen sein. Diese Schalter können durch eine Fahne 15 am Schaltnocken oder durch Kurvenbahnen 16 und Anschläge 17 am Hohlbolzen 4 verstellt werden. Außerdem können durch die Größe und/oder die Form des Gehäuses die auslösbaren Schaltfunktionen eingestellt werden. Die zusätzlichen Schalter 12, 13, 14 im Gehäuse 6 erlauben es Warnlampen sowie Hydraulikfunktionen ein- und auszuschalten.
- 1: Plattform
- 2: Achse
- 3: Parallelführungselement
- 4: Hohlbolzen
- 5: Schaltnocken
- 6: Gehäuse
- 7: Bohrung
- 8: Stift
- 9: Lasche
- 10: Schalter
- 11: Stößel
- 12: Schalter
- 13: Schalter
- 14: Schalter
- 15: Fahne
- 16: Kurvenbahn
- 17: Anschlag

## Patentansprüche

1. Vorrichtung zum Steuern von Hubvorrichtungen, wie Ladebordwände für Lastkraftwagen, Hubladebühnen usw., mit einer automatischen Steuerschaltung, in der eine neigungs- und/oder positionsabhängige Schaltvorrichtung die Steuerschaltung beeinflußt, dadurch gekennzeichnet, daß die Schaltvorrichtung aus einem an der Anlenkung der Hubvorrichtung (1) und deren Gestänge (3) drehfest angekoppelten Gehäuse (6) mit einem daran angebrachten Schalter (10) besteht, der über einen mit der Anlenkung der Hubvorrichtung (1) gekoppelten Schaltnocken (5) verstellbar ist.

2. Vorrichtung nach Anspruch 1, dadurch gekennzeichnet, daß das Gehäuse (6) mit einer Bohrung (7) an einem in der Anlenkachse (2) der Hubvorrichtung (1) fest angebrachten Hohlbolzen (4) und mit einer Lasche (9) an einem Stift (8) eines die Hubvorrichtung (1) tragenden Parallelgestänges (3) drehfest angelenkt ist, und daß der Schaltnocken (5) in der Bohrung des Hohlbolzens (4) mit einem überdrückbaren Kopplungselement eingesetzt ist.

3. Vorrichtung nach Anspruch 1 oder 2, dadurch gekennzeichnet, daß für das überdrückbare Kopplungselement eine reibschlüssige Verbindung eingesetzt ist.

4. Vorrichtung nach einem der Ansprüche 1 oder 2, dadurch gekennzeichnet, daß für das überdrückbare Kopplungselement eine Federabstützung eingesetzt ist.

5. Vorrichtung nach einem der Ansprüche 1 bis 4, dadurch gekennzeichnet, daß der Schaltnocken (5) eine Fahne zum Verstellen des oder der im Gehäuse (6) angeordneten Schalter (10, 13) aufweist.

6. Vorrichtung nach einem der Ansprüche 1 bis 5, dadurch gekennzeichnet, daß der den Schaltnocken (5) tragende Hohlbolzen (4) Kurvenbahnen (16) mit Anschlägen (17) zum positionsabhängigen Verstellen weiterer im Gehäuse (6) angeordneten Schalter (12, 14) aufweist.

7. Vorrichtung nach einem der Ansprüche 1 bis 6, dadurch gekennzeichnet, daß die Größe und/oder die Form des Gehäuses (6) zur Einstellung der auslösbaren Schaltfunktionen veränderbar sind.

## Claims

1. Apparatus for controlling lifting means, such as loading side walls for lorries, elevating platforms and the like, with an automatic control circuit, wherein an inclination and/or position-dependent switching means influences the control circuit, characterised in that the switching means comprises a housing (6) non-rotatably coupled to the linkage of the lifting means (1) and its rod assembly (3), with a switch (10) mounted on it, and that the switch (10) can be reset by means of a control cam (5) coupled to the linkage of the lifting means (1).

2. Apparatus according to claim 1, characterised in that the housing (6) is non-rotatably linked, by a hole (7), with a hollow bolt (4) fixed in the linkage axis (2) of the lifting means (1) and, by a strap (9), with a pin (8) of a parallel rod assembly (3) carrying the lifting means (1), and that the control cam (5) is inserted in the hole in the hollow bolt (4) by a press-over coupling element.

3. Apparatus according to claim 1 or 2, characterised in that a frictional connection is used for the press-over coupling element.

4. Apparatus according to claim 1 or 2, characterised in that a spring support is used for the press-over coupling element.

5. Apparatus according to any of claims 1 to 4, characterised in that the control cam (5) has a lug for resetting the switch or switches (10, 13) arranged in the housing (6).

6. Apparatus according to any of claims 1 to 5, characterised in that the hollow bolt (4) carrying the control cam (5) has cam tracks (16) with stops (17) for position-dependent resetting of other switches (12, 14) arranged in the housing (6).

7. Apparatus according to any of claims 1 to 6, characterised in that the size and/or shape of the housing (6) can be varied for adjustment of the releasable switching functions.

## Revendications

1. Dispositif pour commander des dispositif de levage, tels que des hayons de chargement de camions, des plate-formes élévatrices de chargement etc... avec un circuit de commande automatique, dans lequel un dispositif d'enclenchement dépendant de l'inclinaison et/ou de la position influence le circuit de commande, caractérisé en ce que le dispositif d'enclenchement consiste en un boîtier (6) accouplé de façon solidaire en rotation sur l'articulation du dispositif de levage (1) et sa timonerie (3) avec un interrupteur (10) disposé dessus, qui peut être actionné au moyen d'une came de commande (5) couplée avec l'articulation du dispositif de levage (1).

2. Dispositif selon la revendication 1, caractérisé en ce que le boîtier (6) est articulé de façon solidaire en rotation par un perçage (7) sur un boulon creux (4) disposé de façon fixe dans l'axe de pivotement (2) du dispositif de levage (1) et par une patte (9) sur une tige (8) d'une timonerie de billes parallèles (3) portant le dispositif de levage (1), et en ce que la came de commande (5) est insérée dans le perçage du boulon creux (4) par un élément d'accouplement pouvant être mis en surpression.

3. Dispositif selon la revendication 1 ou 2, caractérisé en ce que pour l'élément d'accouplement pouvant être mis en surpression, une liaison à friction est utilisée.

4. Dispositif selon la revendication 1 ou 2, caractérisé en ce que pour l'élément d'accouplement pouvant être mis en surpression, on utilise un appui élastique.

5. Dispositif selon l'une des revendications 1 à 4, caractérisé en ce que la came de commande (5) présente un marqueur pour manoeuvrer le ou les interrupteurs (10, 13) disposés dans le boîtier (6).

6. Dispositif selon l'une des revendications 1 à 5, caractérisé en ce que le boulon creux (4) qui porte la came de commande (5) présente des pistes courbes (16) avec des butées (17) servant à déplacer, en fonction de la position, d'autres interrupteurs (12, 14) disposés dans le boîtier (6).

7. Dispositif selon l'une des revendications 1 à 6, caractérisé en ce que la grandeur et la forme du boîtier (6) peuvent être modifiées pour régler le déclenchement du fonctionnement des interrupteurs.
